# FASCICULE DE BREVET EUROPEEN

(11) **EP 1 617 171 B1**
(45) Date de publication et mention de la délivrance du brevet: **12.12.2007**
(21) Numéro de dépôt: 04103304.4
(22) Date de dépôt: 12.07.2004
(51) Int. Cl.: G01B 5/012, G01B 7/012, G01B 11/00, G01B 21/04

(54) **Palpeur pour mesures tridimensionnelles**
Taster zur Messung in drei Dimensionen
Feeler for measuring three dimensions

(43) Date de publication de la demande: 18.01.2006
(73) Titulaire: TESA S.A., 1020 Renens (CH)
(72) Inventeur: Zanier, Adriano, 1008, Prilly (CH); Rouge, Claude, 1446, Balmes (CH); Wunderlin, Léonard, 1020, Renens (CH); Jordil, Pascal, 1612, Ecoteaux (CH)
(74) Mandataire: P&TS Patents & Technology Surveys SA

(56) Documents cités:
- EP-A- 0 392 660
- US-A1- 2001 025 427

## Description

L'invention concerne un palpeur à déclenchement orientable dans l'espace selon une multiplicité de directions. Ce palpeur est destiné à être utilisé plus particulièrement, mais non exclusivement, dans une machine à mesurer manuelle ou automatique, ou bien dans une machine outil comme par exemple une fraiseuse, pour la mesure tridimensionnelle d'une pièce usinée ou en cours d'usinage.

Les palpeurs à déclenchement sont des instruments de mesure utilisés largement, mais pas uniquement, sur des lignes de production de pièces mécaniques pour la vérification exacte des dimensions ou des surfaces des pièces mécaniques. Les palpeurs à déclenchement sont aussi utilisés pour la mesure en trois dimensions de pièces de forme complexe, afin de les reproduire ou de les modéliser.

En général les palpeurs à déclenchement comprennent une partie fixe, destinée à être fixée sur une machine à mesurer ou sur une machine outil, et une touche mobile, comprenant une sphère, au bout d'une tige allongée, et destinée à être amenée en contact avec la pièce à mesurer.

Dans la plupart des applications les palpeurs à déclenchement sont fixés sur le bras mobile d'une machine dont la position dans l'espace est déterminable précisément à l'aide d'un système de mesure manuel ou automatique, comme par exemple des encodeurs de position disposés sur les axes de la machine. Le bras mobile est déplacé dans l'espace pour amener la touche de mesure du palpeur en contact avec la pièce ou la surface à mesurer. Lors du contact une force de déflection est alors appliquée sur la touche, la sortant de sa position initiale de repos. Un capteur réagit au moindre déplacement de la touche générant un signal électrique qui est envoyé soit à l'utilisateur, sous forme de signal lumineux, soit au logiciel de contrôle de la machine qui détermine ainsi à l'aide des données du système de mesure les coordonnées du point de contact dans un référentiel donné. A ce but on utilise dans l'art antérieur des capteurs électromécaniques ou optiques ou des capteurs de déplacement basés sur des principes différents, par exemple des capteurs comprenant des jauges de contrainte.

Dans le cas d'un palpeur à déclenchement tridimensionnel, la liaison entre la touche et la partie fixe du palpeur est habituellement réalisée selon le principe de la liaison de Boys, soit par exemple par trois goupilles cylindriques reposant sur six sphères de façon à définir six points de contact entre l'organe fixe et la touche. On connaît toutefois aussi des palpeurs bi- et unidimensionnels.

Lorsque le palpeur est utilisé pour la mesure de pièces de forme complexe, présentant des cavités et des protubérances, il est malaisé ou impossible d'amener la touche en contact avec toute la surface de la pièce sans que la partie fixe du palpeur ou la tige de la touche interfère avec des éléments de la pièce à mesurer. Pour pallier cet inconvénient, on connaît des palpeurs permettant d'orienter la touche de contact dans une pluralité de directions dans l'espace. En général deux axes indépendants de rotation sont requis pour couvrir l'ensemble des orientations possibles.

Le brevet Européen EP0392660 décrit un palpeur à indexation manuelle comprenant deux parties orientables selon deux axes de rotation orthogonaux. Ces éléments orientables sont maintenus en position bloquée, lors de la mesure, par un ressort plat. Cette disposition relativement complexe ne permet pas el déblocage indépendant des deux éléments orientables. Par ailleurs, la force de maintien, en ce dispositif n'est pas rigoureusement alignée avec les axes de rotation, ce qui peut engendrer une erreur de positionnement.

La demande de brevet US 2001/025427 divulgue une touche de palpage à indexation manuelle comprenant deux parties orientables selon deux axes de rotation orthogonaux indépendants.

De préférence les axes de rotation sont indexés, dans le sens qu'ils prévoient un nombre suffisamment grand mais fini de positions de repos prédéterminés et exactement reproductibles. Cette disposition évite de devoir calibrer à nouveau la machine à mesurer après chaque changement de l'orientation de la touche.

Durant la mesure les axes permettant l'orientation du palpeur de l'art antérieur ci-dessus sont bloqués dans une des positions indexées prévues. Lorsqu'une orientation différente du palpeur est requise, l'opérateur doit déverrouiller manuellement les axes, en agissant sur une molette ou sur un levier prévu à cet effet, pour orienter le palpeur comme requis, et verrouiller à nouveau les axes en repositionnant la molette ou le levier dans la position de blocage initiale. Ces manoeuvres peuvent entraîner des erreurs de positionnement, par exemple suite à un mouvement involontaire du premier axe, au moment du positionnement du second.

Un autre inconvénient du palpeur décrit ci-dessus est que les opérations de verrouillage et déverrouillage requièrent l'application d'un couple externe sur la molette de blocage, qui est transmis par le palpeur et son support au bras mobile de la machine à mesurer. Ce couple net provoque des efforts mécaniques sur le support du palpeur, et peut faire bouger tout le palpeur. Pour éviter cet inconvénient, l'opérateur doit maintenir le palpeur immobile lorsqu'il agit sur la molette de blocage, ce qui rend la manoeuvre avec une seule main malaisée ou impossible.

Un but de la présente invention est de proposer un palpeur à déclenchement, orientable dans une multiplicité de directions indexées, dont le positionnement est effectué de manière fiable sans risque d'erreur de positionnement.

Un autre but de la présente invention est de proposer un palpeur à déclenchement sans les limitations de l'art antérieur.

Un autre but de la présente invention est de proposer un palpeur à déclenchement, orientable dans une multiplicité de directions indexées, dont la manoeuvre est plus facile que dans les palpeurs de l'art antérieur.

Selon l'invention ces buts sont atteints par un palpeur à déclenchement orientable pour orienter une touche de mesure relativement à un appareil de mesure comprenant : un élément de support ; un élément mobile connecté audit élément de support pouvant tourner autour d'un axe relativement audit élément de support; un organe résilient axial, pour maintenir ledit élément mobile en une position bloquée, interdisant la rotation dudit élément mobile; des éléments d'indexation, définissant six points de contact entre ledit élément de support et ledit élément mobile, pour définir une multiplicité de positions angulaires prédéterminés et reproductibles pour ledit élément mobile, lorsque ledit élément mobile est en position bloquée, un actuateur, s'opposant audit organe résilient, pour dégager ledit élément mobile dudit élément de support, permettant la rotation dudit élément mobile autour dudit axe, dans lequel aucun autre contact n'existe entre ledit élément de support et ledit élément mobile, mis à part lesdits six points de contact et ladite connexion avec ledit organe résilient, lorsque ledit élément mobile est en position bloquée, caractérisé en ce que ledit élément de support comprend une tige de support, pour fixer ledit palpeur audit appareil de mesure et ledit organe résilient comprend un ressort cylindrique, disposé axialement dans un espace intérieur de ladite tige de support, connecté audit élément mobile par une tige alignée avec ledit axe.

Les revendications dépendantes illustrent des caractéristiques optionnelles de l'invention.

La présente invention sera mieux comprise à la lecture de la description donnée à titre d'exemple et illustrée par les figures annexées.
- La figure 1 représente un mode de réalisation d'un palpeur à déclenchement selon l'invention ;
- La figure 2 représente en coupe le palpeur à déclenchement selon l'invention représenté sur la figure 1 ;
- Les figures 3 et 4 représentent le mécanisme d'indexation et de démultiplication utilisé pour dégager un second axe horizontal du palpeur de la figure 1 ;
- La figure 5 représente une partie fixe du palpeur de la figure 1 a;
- La figure 6 représente une partie mobile autour d'un premier axe vertical du palpeur de la figure 1;
- La figure 7 représente un mécanisme d'indexation et de démultiplication utilisé pour dégager un premier axe vertical du palpeur de la figure 1 ;
- La figure 8 représente le palpeur de la figure 1 à une étape partielle de son assemblage ;
- La figure 9 représente en coupe le palpeur de la figure 1 dans une position verrouillée ;
- La figure 10 représente en coupe le palpeur de la figure 1 dans une position dégagée d'un premier axe de rotation vertical.

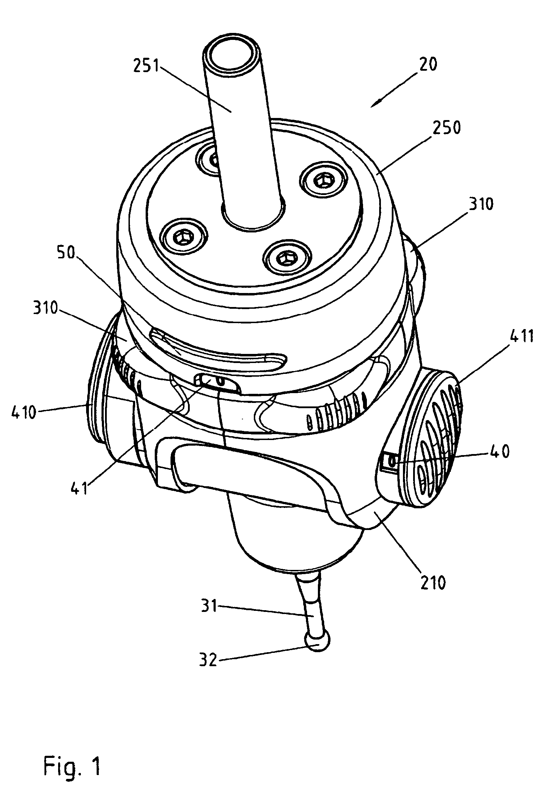

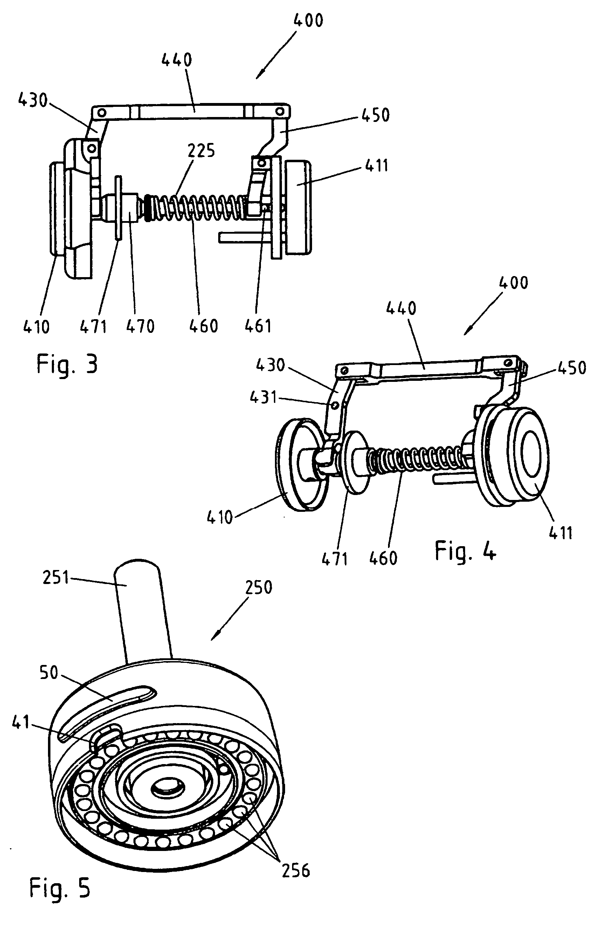

Le premier mode de réalisation de l'invention représenté sur la figure 1 est un palpeur à déclenchement 20 comprenant une partie fixe 250, représentée en détail sur la figure 5, destinée à être fixée au bras mobile d'une machine à mesurer par la tige filetée 251 ou par un autre moyen de fixation connu.

La partie fixe 250 porte sur sa face inférieure 24 sphères 256, régulièrement disposées le long d'une circonférence et partiellement saillantes vers le bas. Les sphères 256 définissent 24 positions indexées et écartées de 15 degrés pour le premier axe de rotation du palpeur, comme il est expliqué plus loin. II est évident qu'on pourrait utiliser un nombre différent de sphères selon le nombre désiré de positions indexées.

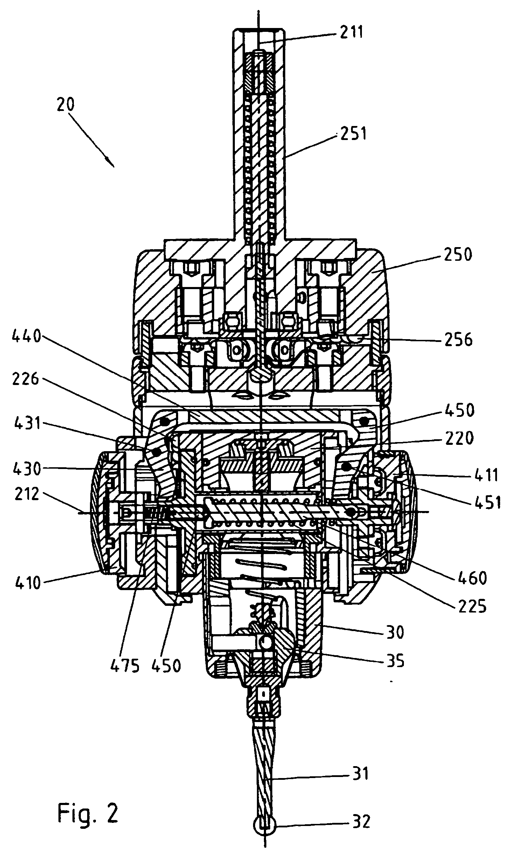

Selon l'application, le palpeur de l'invention peut être utilisé avec n'importe quelle orientation dans l'espace. Par commodité, avec référence à la figure 2, on utilisera par la suite le terme « vertical » pour désigner le premier axe de rotation du palpeur 211, correspondant à l'axe géométrique du palpeur, et le terme « horizontal » pour le deuxième axe 212, orthogonale à celui-d. Ces termes se réfèrent à l'orientation conventionnelle utilisée dans les figures, et notamment dans la figure 2 sur laquelle les deux axes 211 et 212 sont représentés.

Par practicité on désigne aussi par la suite les deux axes et divers C éléments du palpeur avec le termes « premier » et « deuxième ». Il ne faut pas toutefois comprendre ces termes dans le sens que l'invention se limite à un dispositif avec deux axes, l'invention comprenant aussi des palpeurs avec un, trois, ou n'importe quel nombre d'axes de rotation. Les termes « premier » et « deuxième » n'impliquent pas non plus une relation d'ordre quelconque ou de subordination entre les éléments, et sont ici employés comme simples indicateurs pour distinguer les éléments du dispositif de l'invention.

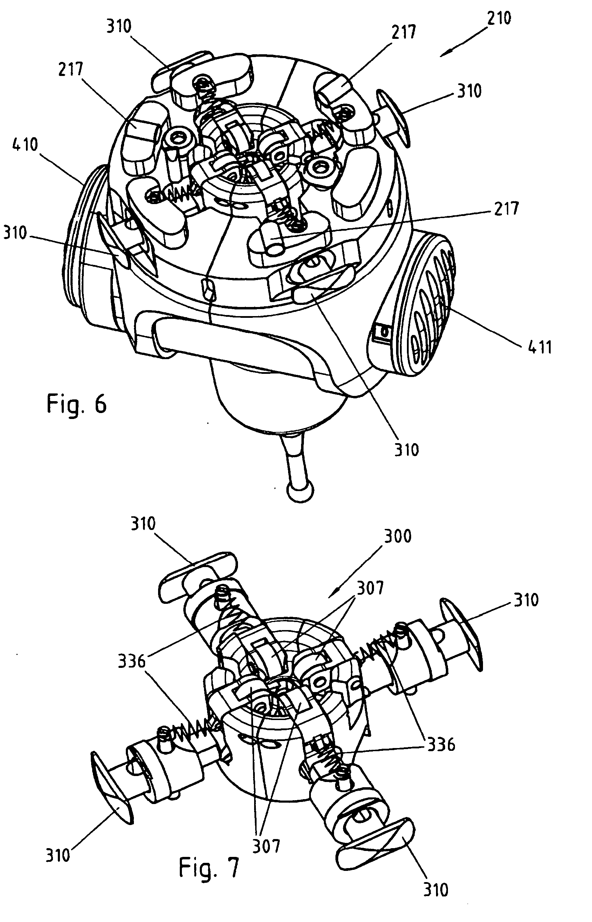

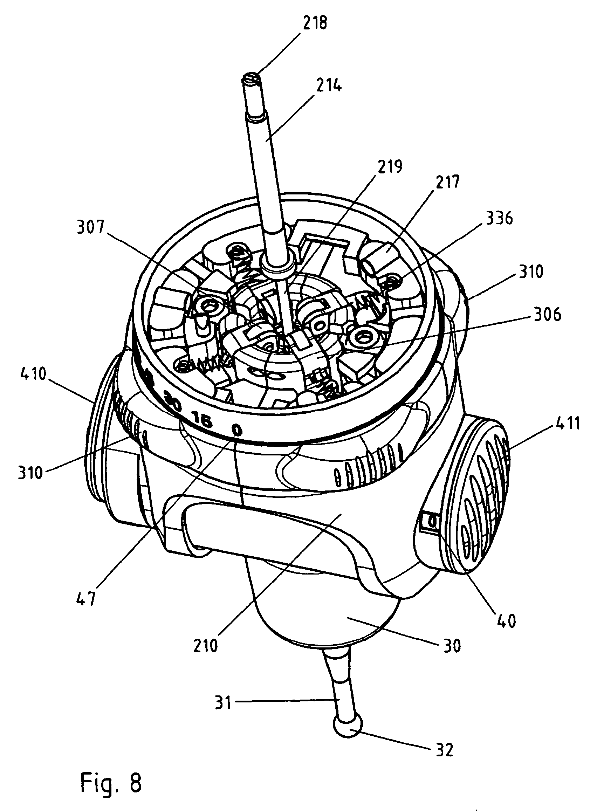

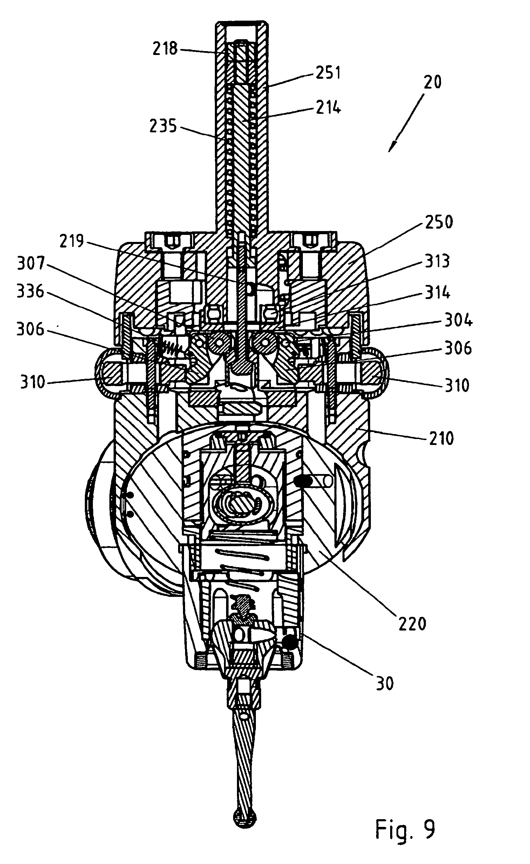

L'élément mobile 210, représenté sur les figures 6 et 8, porte sur sa face supérieure trois goupilles cylindriques 217. Le ressort cylindrique 235, visible sur la figure 9, tire l'élément mobile 210 contre l'élément fixe 250 par la tige 219. En cette situation chacune des goupilles 217 appuie sur deux des sphères 256, les six points de contact résultants déterminant la position relative des éléments 250 et 210 de façon précise et reproductible.

Vu la symétrie de rotation de l'élément fixe, l'élément mobile 210 peut assumer 24 positions indexées, écartées de 15 degrés entre elles, autour du premier axe de rotation 211, qui correspond à l'axe géométrique du palpeur. Le même résultat aurait pu être obtenu par d'autres dispositions équivalentes, par exemple en disposant les sphères sur l'élément mobile et les goupilles sur l'élément fixe, ou bien en remplaçant les surfaces sphériques ou cylindriques des goupilles ou des sphères par des plans inclinés, ou encore en utilisant six goupilles cylindriques n'ayant chacune qu'un seul point de contact avec une des sphères. Il serait également possible de remplacer le ressort plat 235 par un organe résilient équivalent, par exemple un ressort à lame ou par un élément réalisé en un matériau synthétique résilient.

Le mécanisme de dégagement 300, représenté sur les figures 7, 8, 9 et 10, permet d'autoriser la rotation de l'élément mobile 210 autour de l'axe 211. La transmission 300 se compose de quatre leviers 306, entraînés par les quatre boutons poussoirs 310, et par les quatre galets 307, référencés sur la figure 7.

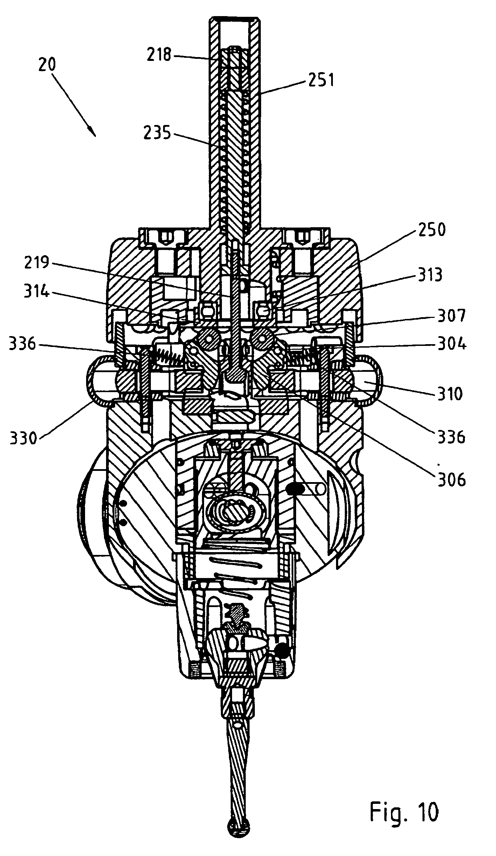

Lorsque deux boutons 310 opposés sont pressés, les leviers 306 tournent autour des pivots 304 et abandonnent la position verrouillée de la figure 9, jusqu'à assumer une position essentiellement verticale, tel que représenté sur la figure 10, montrant le mécanisme d'indexation du premier axe 211 en position déverrouillée.

En position déverrouillée les galets 307 poussent contre la bague d'appui 314 et, par le roulement à bille 313, écartent axialement l'élément fixe 250 de l'élément mobile 210. Dans la position écartée les sphères 256, référencés sur les figures 9 et 10, dépassent au dessus des goupilles 217 sans les toucher, et la rotation autour de l'axe 211 est possible.

La force d'appui des goupilles 217 sur les sphères 256 doit être suffisamment élevée pour empêcher tout mouvement accidentel de la partie mobile 210 durant la mesure. Dans ce mode de réalisation particulier on dimensionne le ressort d'indexation 235 pour une force totale d'appui d'approximativement 30 N, par exemple, soit environ 10 N pour chacun des six points de contact, puisque l'appui est exercé à 60 degrés par rapport à l'axe.

Il serait malaisé d'appliquer directement une force de 30 N sur les boutons 310. Pour cette raison les dimensions des leviers 306, et la position des pivots 304, sont choisies pour donner un rapport de démultiplication suffisant entre la force radiale exercée sur les boutons 310 et la force axiale qui s'oppose à l'élasticité du ressort 235. Un rapport de réduction de 1:2, par exemple, implique une force de manoeuvre aux boutons 310 d'environ 15 N, soit 1.5 Kgf approximativement, que l'utilisateur peut exercer sans grande difficulté. La course des boutons 310 reste contenue, avec ce rapport de réduction, à quelques millimètres.

Les valeurs numériques données ci-dessus doivent être interprétés comme des exemples particulièrement adaptés au mode de réalisation présenté. Il serait possible de choisir des valeurs différentes selon les circonstances, par exemple selon la masse et les dimensions du palpeur.

Pour assurer le dégagement de l'élément mobile 210 autour de l'axe de rotation 211, il est nécessaire d'agir simultanément sur deux boutons opposés 310. De cette manière les forces externes exercées sur le palpeur sont essentiellement en opposition et perpendiculaires à l'axe de rotation 211, la force résultante et le couple résultant sont essentiellement nuls, et tout mouvement involontaire du palpeur est prévenu.

Pendant que les boutons 310 sont pressés selon la direction radiale, l'opérateur peut faire tourner l'élément mobile 210 autour de l'axe 211, en agissant sur les mêmes boutons en direction tangentielle. Cette manoeuvre est très intuitive et peut aisément être réalisée avec deux doigts d'une main. En cette condition l'écartement distance entre les sphères 256 et les goupilles 217 est suffisant pour éviter tout contact ou frottement des surfaces d'indexation, préservant ainsi la précision de positionnement en position indexé. II n'est donc pas nécessaire de relâcher les boutons 310 pour passer du déverrouillement à la rotation du palpeur puis pour verrouiller à nouveau le palpeur.

Le rapport de réduction et le coefficient de friction des matériaux utilisées sont choisi pour que la transmission 300 soit réversible, de la sorte que l'élément mobile 210 retourne spontanément en position indexée, une fois la pression sur les boutons 310 relâchée, évitant ainsi une utilisation accidentelle en position libre.

La force d'écartement entre l'élément fixe 250 et l'élément mobile 210 générée par la transmission 300, est essentiellement alignée et opposée à la force exercée par le ressort d'indexation 235 transmise par les tiges 214 et 219, de manière à assurer une rotation sans frottement en position libre.

Avantageusement, un roulement 313, par exemple une butée à billes, est interposé entre l'élément fixe 250 et l'élément mobile 210, de manière à réduire le frottement lors de la rotation autour du premier axe 211. Un autre type de roulement, par exemple un roulement à billes ou à rouleaux pourrait aussi être employé à la place de la butée à billes.

Dans la position verrouillée, visible sur la figure 9, les galets 307 sont éloignés de la bague d'appui 314 par les ressorts de rappel 336. Un petit jeu (non visible) est présent entre les galets 307 et la bague d'appui 314, et cela pour n'importe quelle orientation du palpeur dans l'espace.

De cette manière, en position de repos seul les six points de contact entre les billes 256 et les goupilles 217 constituent la réaction à l'action du ressort d'indexation 235. Aucune autre pièce, pouvant créer une quelconque contrainte, forcément négative pour la précision, ne reste en contact entre l'élément fixe 250 et l'élément mobile 210.

La force du ressort d'indexation, d'ailleurs, est appliquée par les tiges 214 et 219 exactement au centre de gravité desdits six points de contact, et en correspondance de l'axe de rotation 211, pour assurer un appui optimal.

Le ressort d'indexation 235 est de préférence logé à l'intérieur de la tige de support 251, afin de pouvoir utiliser un ressort très long, et donc à faible raideur, ce qui assure une force de traction constante sur toute la course de travail. La force d'indexation peut être aisément ajustée, par l'utilisation de la vis 218 en bout de la tige de support, ou par un autre moyen équivalent. La vis 218 est facilement accessible de l'extérieur sans démonteur le palpeur, par simple ouverture du capuchon 252, par exemple.

Le premier élément mobile 210 est connecté à un second élément mobile 220, pouvant tourner autour de l'axe de rotation 212, perpendiculaire au premier axe de rotation 211, auquel est fixée un déclencheur 30 de type connu, comme on peut l'apprécier sur la figure 2.

Le second élément mobile 220 est pressé contre le premier élément mobile 210, dans la direction axiale définie par l'axe de rotation 212, par le ressort de compression 225. Une couronne de sphères 226 est réalisée sur une face verticale de l'élément mobile 220 et interagit avec trois goupilles cylindriques (non représentées sur la figure) placés sur la face adjacente du premier élément mobile 210, pour définir un nombre prédéterminé de position d'indexation exactement reproductibles, de façon analogue à celle expliquée ci-dessus pour la rotation du premier élément mobile 210.

Dans une variante possible, six goupilles cylindriques n'ayant chacune qu'un seul point de contact peuvent être utilisées.

Le système de dégagement et rotation 400 du second élément mobile 220 est représenté sur les figures 3 et 4. Le dégagement s'effectue par pression sur les deux boutons 411 et 410. La force axiale appliquée sur le bouton 410 qui peut coulisser axialement autour de la pièce 470 est transmise par les deux leviers 430 et 450 et le bras horizontal 440, est multipliée et appliquée au ressort 225 par la goupille 461 et la tige 460, afin de le compresser, ce qui supprime la force de contact entre 220 et 210. En ce mode de réalisation on choisit les dimensions des bras des leviers 430, 450 pour obtenir un rapport de réduction de la force de manoeuvre de 1:2, par exemple, comme pour le premier élément mobile 210. Sur la figure 2, un deuxième ressort 475, interposé entre le bouton 410 la pièce 470 pousse axialement vers la droite le second élément mobile 220 en autorisant sa rotation.

Lorsque le bouton 410 est pressé le second élément mobile 220 est déplacé vers la droite de la figure 2, en sorte que les goupilles et les sphères d'indexation 226 ne se touchent plus, et le deuxième élément mobile 220 peut tourner autour de l'axe 212. La rotation est imprimée par l'opérateur au travers du bouton 410 qui est solidarisé angulairement à la pièce 470 par une goupille non visible sur les figures.

Le bouton 411, opposé au bouton 410, a la double fonction d'offrir une surface d'appui au doigt pour exercer une force opposée à celle appliquée sur le bouton 410 et de faciliter la rotation de l'élément 220 avec deux doigts. Le bouton 411 est en fait solidarisé angulairement à l'élément 220 et est entraîné en rotation avec celui-ci. L'utilisation de deux forces essentiellement en opposition évite de transmette des efforts sur le support du palpeur, et de faire bouger tout le palpeur.

L'action du bouton 410 sur le second élément mobile 220 par l'intermédiaire de la tige 460 est substantiellement alignée et opposée à la force exercée par le ressort 225, ce qui assure des mouvements rectilignes et sans coincements.

Le signal électrique généré par le déclencheur 30 est envoyé soit à l'utilisateur, sous forme de signal lumineux émis par la diode lumineuse 50 (figure 1), soit au logiciel de contrôle de la machine qui détermine ainsi à l'aide des données du système de mesure, les coordonnées du point de contact dans un référentiel donné.

Le second élément mobile 220 peut assumer, dans ce mode de réalisation, 7 positions indexées écartées de 15 degrés entre elles, pour un angle total de 90 degrés. Cet angle, en combinaison avec les 360 degrés de rotation possible pour le premier élément de rotation 210, permet d'orienter le déclencheur 30 dans un nombre de directions uniformément distribuées dans un demi-espace. Il serait toutefois possible de réaliser le dispositif de l'invention avec un nombre générique de positions indexées et des écartements quelconques entre elles.

Se référant maintenant à la figure 10, les boutons 310 sont entourés par une membrane protectrice annulaire en caoutchouc ou en élastomère 330, qui a la fonction de protéger le mécanisme interne des saletés et poussières, et aussi d'empêcher la transmission de chaleur des mains de l'opérateur au mécanisme d'indexation interne, qui aurait des conséquences néfastes sur la précision d'indexation. Dans le même but, les boutons 410 et 411, servant à la rotation et au dégagement du second axe 212, sont aussi réalisés de préférence en un matériau synthétique ayant des bonnes propriétés d'isolation thermique.

Une fenêtre 41 est prévue sur l'élément de support 250 permettant de lire l'angle de rotation relatif au premier axe 211 sur une échelle 47 gravée ou imprimée sur le premier élément mobile 210, comme on peut l'apprécier sur les figures 1 et 8.

L'angle de rotation relatif au second axe 212 peut être lu dans l'une des deux fenêtres 40 découpées dans la couronne externe du bouton 411. Au moins deux fenêtres sont nécessaires dans notre cas pour permettre une visibilité optimale dans toutes les orientations possibles du palpeur.

Le déclencheur 30 réagit au moindre contact avec la surface de la pièce à mesurer en générant une impulsion électrique. L'impulsion est transmise, par l'intermédiaire d'un circuit de traitement électronique et d'un connecteur non représentés, vers le dispositif de contrôle de la machine à mesurer, et au voyant lumineux 50. Le voyant comprend dans ce mode de réalisation une diode lumineuse, mais pourrait comprendre en alternative d'autres émetteurs de lumière connus, comme par exemple des éléments électroluminescents en feuille ou en fil. La diode lumineuse est surmontée par un diffuseur optique de lumière, permettant d'apercevoir la lumière émise dans une grande plage d'angles d'observation.

Dans un mode alternative de réalisation de l'invention, le voyant 50 est remplacé par plusieurs voyants, disposés à des endroits différents du palpeur, de sorte qu'au moins un voyant soit visible de chaque angle d'observation possible.

Dans une autre version du dispositif de l'invention le voyant 50 comprend un ou plusieurs conducteurs de lumière pour émettre la lumière produite par une ou plusieurs sources lumineuses à partir de différents endroits de la surface du palpeur, en sorte que l'indication lumineuse soit visible de chaque angle d'observation possible.

L'invention comprend aussi un mode de réalisation dans lequel la rotation et le dégagement des axes sont actionnés par des actuateurs automatiques, par exemple des moteurs et/ou des solénoides électriques.

## Revendications

1. Palpeur à déclenchement orientable (20) pour orienter une touche de mesure (30) relativement à un appareil de mesure comprenant : un élément de support (250) ;
un élément mobile (210) connecté audit élément de support (250) pouvant tourner autour d'un axe (211) relativement audit élément de support (250); un organe résilient (235) axial, pour maintenir ledit élément mobile (210) en une position bloquée, interdisant la rotation dudit élément mobile (210);
des éléments d'indexation (256, 217), définissant six points de contact entre ledit élément de support (250) et ledit élément mobile, pour définir une multiplicité de positions angulaires prédéterminés et reproductibles pour ledit élément mobile (210), lorsque ledit élément mobile est en position bloquée,
un actuateur (300), s'opposant audit organe résilient (235), pour dégager ledit élément mobile (210) dudit élément de support (250), permettant la rotation dudit élément mobile autour dudit axe (211),
dans lequel aucun autre contact n'existe entre ledit élément de support (250) et ledit élément mobile (210), mis à part lesdits six points de contact et ladite connexion avec ledit organe résilient (235), lorsque ledit élément mobile (210) est en position bloquée,
**caractérisé en ce que** ledit élément de support (250) comprend une tige de support (251), pour fixer ledit palpeur audit appareil de mesure et ledit organe résilient (235) comprend un ressort cylindrique, disposé axialement dans un espace intérieur de ladite tige de support, connecté audit élément mobile par une tige (219) alignée avec ledit axe (211).

2. Palpeur selon la revendication 1, comprenant un roulement (313), interposé entre ledit élément de support (250) et ledit élément mobile (210), pour réduire le frottement lors de la rotation autour dudit axe (211).

3. Palpeur selon la revendication 2, dans lequel ledit actuateur (300) comprend des galets (307), pour exercer une force d'écartement entre ledit élément mobile (210) et ledit élément de support (250), au travers dudit roulement (313).

4. Palpeur selon la revendication 1, dans lequel ledit actuateur (300) est solidaire dudit élément mobile (220) et comprend au moins un dispositif de rappel (336), pour rappeler ledit actuateur dudit élément de support (250) lorsque ledit élément mobile est en position bloquée.

5. Palpeur selon la revendication 1, comprenant un deuxième élément mobile (220) connecté audit élément mobile (210) par un deuxième axe (212) pour tourner ledit deuxième élément mobile (220) relativement audit élément mobile (210);
un deuxième organe résilient (225), actionnable indépendamment dudit organe résilient (235), pour maintenir ledit deuxième élément mobile (220) en une position bloquée, interdisant la rotation dudit deuxième élément mobile (220).

6. Palpeur selon la revendication 5, dans lequel le dégagement dudit élément mobile (210), et/ou dudit deuxième élément mobile (220) est effectué par déplacement dans la direction dudit axe (211), respectivement dudit deuxième axe (212).

7. Palpeur selon la revendication 1, comprenant une touche de mesure (30) fixée audit deuxième élément mobile (220).

8. Palpeur selon la revendication 5, dans lequel ledit actuateur (300) et/ou ledit deuxième actuateur (400) dégagent ledit élément mobile (210), respectivement ledit deuxième élément mobile par l'action de deux forces externes essentiellement symétriques et opposées appliquées audit actuateur, respectivement audit deuxième actuateur.

9. Palpeur selon la revendication 8, dans lequel ledit actuateur (300) et/ou ledit deuxième actuateur (400) entraînent en rotation ledit élément mobile (210), respectivement ledit deuxième élément mobile (220), par l'action d'un couple de forces externes appliqué audit actuateur (300), respectivement audit deuxième actuateur (400).

10. Palpeur selon la revendication 8, dans lequel ledit actuateur (300) et/ou ledit deuxième actuateur (400) sont arrangés pour cesser leur action lorsque les deux dites forces externes symétriques et opposées s'interrompent.

11. Palpeur selon la revendication 8, dans lequel ledit actuateur (300) et/ou ledit deuxième actuateur (400) comprennent un mécanisme de démultiplication, pour réduire l'intensité de la force requise pour dégager ledit élément mobile, respectivement ledit deuxième élément mobile.

12. Palpeur selon la revendication 11, dans lequel ledit mécanisme de démultiplication comprend au moins un levier à bras inégaux.

13. Palpeur selon la revendication 8, dans lequel lesdites deux forces externes ont une direction essentiellement perpendiculaire audit axe (211), et lesdites deux forces externes sont supportées par au moins deux boutons placés sur ledit palpeur en positions diamétralement opposées par rapport audit axe (211).

14. Palpeur selon la revendication 5, comprenant une ou plusieurs fenêtres pour indiquer la position angulaire dudit élément mobile (210), respectivement dudit deuxième élément mobile (220).

15. Palpeur selon la revendication 14, comprenant au moins deux fenêtres pour indiquer la position dudit deuxième élément mobile (220).

16. Palpeur selon la revendication 1, comprenant une indication lumineuse de grande taille pour permettre le contrôle du fonctionnement du palpeur depuis n'importe quelle position du palpeur.

17. Palpeur selon la revendication 1, comprenant une couche externe thermiquement isolante, pour éviter la conduction de la chaleur des mains dans le palpeur.

18. Palpeur selon la revendication 5, dans lequel l'action dudit actuateur (300) sur ledit élément mobile (210) est substantiellement alignée et opposée à la force exercée par ledit élément résilient (235) sur ledit élément mobile (210).

19. Palpeur selon la revendication 5, dans lequel l'action dudit deuxième actuateur (400) sur ledit deuxième élément mobile (220) est substantiellement alignée et opposée à la force exercée par ledit deuxième élément résilient (225) sur ledit deuxième élément mobile (220).

## Claims

1. Orientable touch probe (20) for orienting a measuring feeler (30) relatively to a measuring apparatus, including:
a support element (250);
a mobile element (210) connected with said support element (250), capable of turning around an axis (211) relatively to said support element (250);
an axial resilient organ (235) for holding said mobile element (210) in a locked position, preventing said mobile element (210) from rotating;
indexing elements (256, 217) defining six contact points between said support element (250) and said mobile element, for defining a multiplicity of predetermined and reproducible angular positions for said mobile element (210) when said mobile element is in locked position;
an actuator (300) opposed to said resilient organ (235) for disengaging said mobile element (210) from said support element (250), allowing said mobile element to rotate around said axis (211),
wherein no other contact exists between said support element (250) and said mobile element (210) apart from said six contact points and said connection with said resilient organ (235) when said mobile element (210) is in locked position
**characterized in that** said support element (250) comprises a support rod (251) for fastening said probe to said measuring apparatus and said resilient organ (235) comprises a helical spring placed axially in an inner space of said support rod, connected to said mobile element by a rod (219) aligned with said axis (211).

2. Probe according to claim 1, comprising a bearing (313) interposed between said support element (250) and said mobile element (210) reducing the friction when it rotates around said axis (211).

3. Probe according to claim 2, wherein said actuator (300) comprises rollers (307) for exerting a moving-apart force between said mobile element (210) and said support element (250) through said bearing (313).

4. Probe according to claim1, wherein said actuator (300) is united with said mobile element (220) and comprises at least one return device (336) for returning said actuator of said support element (250) when said mobile element is in locked position.

5. Probe according to claim 1, comprising a second mobile element (220) connected with said mobile element (210) by a second axis (212) for turning said second mobile element (220) relatively to said mobile element (210);
a second resilient organ (225), that can be actuated independently from said resilient organ (235) for holding said second mobile element (220) in a locked position preventing said second mobile element (220) from rotating.

6. Probe according to claim 5, wherein the disengaging of said mobile element (210) and/or of said second mobile element (220) is effected by a displacement in the direction of said axis (211) respectively of said second axis (212).

7. Probe according to claim 1, comprising a measuring feeler (30) fastening to said second mobile element (220).

8. Probe according to claim 5, wherein said actuator (300) and/or said second actuator (400) disengaging said mobile element (210) respectively said second mobile element through the action of two external forces essentially symmetrical and opposed, applied to said actuator respectively to said second actuator.

9. Probe according to claim 8, wherein said actuator (300) and/or said second actuator (400) drive in rotation said mobile element (210) respectively said second mobile element (220), through the action of two external forces applied to said actuator (300) respectively to said second actuator (400).

10. Probe according to claim 8, wherein said actuator (300) and/or said second actuator (400) are arranged to cease their action when the two said external symmetric and opposed forces are interrupted.

11. Probe according to claim 8, wherein said actuator (300) and/or said second actuator (400) comprise an advantage mechanism for reducing the intensity of the force required for disengaging said mobile element respectively said second mobile element.

12. Probe according to claim 11, wherein said advantage mechanism comprises at least one lever with unequal arms.

13. Probe according to claims 8, wherein said two external forces have a direction essentially perpendicular to said axis (211) and said two external forces are supported by at least two buttons placed on said probe in positions diametrically opposed relative to said axis (211).

14. Probe according to claim 5, comprising one or several windows for indicating the angular position of said mobile element (210) respectively of said second mobile element (220).

15. Probe according to claim 14, comprising at least two windows for indicating the position of said second mobile element (220).

16. Probe according to claim 1, comprising a large-size light indication for allowing the operation of the probe to be controlled from any position of the probe.

17. Probe according to claim 1, comprising a heat insulating external layer for preventing heat conduction from the hands to the probe.

18. Probe according to claim 5, wherein the action of said actuator (300) on said mobile element (210) is substantially aligned and opposed to the force exerted by said resilient element (235) on said mobile element (210).

19. Probe according to claim 5, wherein the action of said second actuator (400) on said second mobile element (220) is substantially aligned and opposed to the force exerted by said second resilient element (225) on said second mobile element (220).

## Patentansprüche

1. Auslösungstaster mit einstellbarer Orientierung (20) zum Orientieren eines Tasteinsatzes (30) in Bezug auf einen Messapparat, mit:
einem Stützelement (250);
einem beweglichen Element (210), das mit dem besagten Stützelement (250) verbunden ist und das um eine Achse (211) in Bezug auf das besagte Stützelement (250) drehen kann;
einem axialen elastischen Element (235), um das besagte bewegliche Element (210) in einer verriegelten Position zu halten, welche das Drehen des besagten beweglichen Element (210) verbietet;
Indexierungselementen (256, 217), welche sechs Kontaktpunkte zwischen dem besagten Stützelement (250) und dem beweglichen Element definieren, um eine Vielzahl von vorbestimmten und reproduzierbaren Winkelpositionen für das besagte bewegliche Element (210) zu definieren, wenn sich das besagte bewegliche Element in verriegelten Position befindet,
einem Stellantrieb (300), der dem besagten elastischen Element (235) entgegenwirkt, um das besagte bewegliche Element (210) vom besagten Stützelement (250) zu lösen, was das Drehen des besagten beweglichen Elements um die besagte Achse (211) erlaubt,
worin es keinen anderen Kontakt zwischen dem besagten Stützelement (250) und dem besagtem beweglichen Element (210) gibt, ausser der besagten sechs Kontaktpunkte und der besagten Verbindung mit dem besagten elastischen Element (235), wenn sich das besagte bewegliche Element (210) in verriegelter Position befindet,
**dadurch gekennzeichnet, dass** das besagte Stützelement (250) einen Stützstift (251) umfasst, um den besagten Taster mit dem besagten Messapparat zu befestigen, und dass das besagte elastische Element (235) eine zylindrische Feder umfasst, die axial in einem Innenraum des besagten Stützstiftes angeordnet ist und mit dem besagten beweglichen Element durch einen mit der besagten Achse (211) ausgerichteten Stift (219) verbunden ist.

2. Taster gemäss Anspruch 1, mit einem zwischen dem besagten Stützelement (250) und dem besagten beweglichen Element (210) zwischengestellten Lager (313), um die Friktion während der Drehung um die besagte Achse (211) zu verringern.

3. Taster gemäss Anspruch 2, worin der besagte Stellantrieb (300) Rollen (307) umfasst, um eine Spreizkraft zwischen dem besagten beweglichen Element (210) und dem besagten Stützelement (250) durch den besagten Lager (313) auszuüben.

4. Taster gemäss Anspruch 1, worin der besagte Stellantrieb (300) mit dem besagten beweglichen Element (220) fest verbunden ist und mindestens eine Rückholvorrichtung (336) umfasst, um den besagten Stellantrieb vom besagten Stützelement (250) zurückzuholen, wenn sich das besagte bewegliche Element in verriegelter Position befindet.

5. Taster gemäss Anspruch 1, mit einem zweiten beweglichen Element (220), das mit dem besagten beweglichen Element (210) durch eine zweite Achse (212) verbunden ist, um das besagte zweite bewegliche Element (220) in Bezug auf das besagte bewegliche Element (210) zu drehen;
[und mit] einem zweiten elastischen Element (225), das unabhängig vom ersten elastischen Element (215) betätigt werden kann, um das zweite bewegliche Element (220) in einer verriegelten Position zu halten, was das Drehen des besagten zweiten beweglichen Elements (220) verbietet.

6. Taster gemäss Anspruch 5, worin das Lösen des besagten beweglichen Elements (210) und/oder des besagten zweiten beweglichen Elements (220) durch Verschiebung in die Richtung der ersten Achse (211) bzw. der zweiten Achse (212) erfolgt.

7. Taster gemäss Anspruch 1, mit einem auf das zweite bewegliche Element (220) befestigten Taststift (30).

8. Taster gemäss Anspruch 5, worin der besagte Stellantrieb (300) und/oder der besagte zweite Stellantrieb (400) das erste bewegliche Element (210) bzw. das zweite bewegliche Element lösen, durch Einwirkung von zwei externen, wesentlich symmetrischen und entgegen gesetzten Kräften, welche auf den ersten bzw. zweiten Stellantrieb angewendet werden.

9. Taster gemäss Anspruch 8, worin der besagte Stellantrieb (300) und/oder der besagte zweite Stellantrieb (400) das besagte erste bewegliche Element (210) bzw. das besagte zweite bewegliche Element (220) durch Einwirkung von zwei auf den Stellantrieb (300) bzw. auf den besagten zweiten Stellantrieb (400) angewendeten externen Kräften drehen.

10. Taster gemäss Anspruch 8, worin der besagte Stellantrieb (300) und/oder der besagte zweite Stellantrieb (400) angeordnet sind, um ihre Tätigkeit einzustellen, wenn die besagten zwei externen, symmetrischen und entgegen gesetzten Kräften unterbrochen werden.

11. Taster gemäss Anspruch 8, worin der besagte Stellantrieb (300) und/oder der besagte zweite Stellantrieb (400) eine mechanische Übersetzung umfassen, um die Intensität der zum Lösen des bzw. des zweiten beweglichen Elements benötigten Kraft zu verringern.

12. Taster gemäss Anspruch 11, worin die mechanische Übersetzung mindestens einen Hebel mit ungleichen Armen umfasst.

13. Taster gemäss Anspruch 8, worin die besagten zwei externen Kräfte eine zur besagten Achse (211) wesentlich senkrechten Richtung aufweisen, und die besagten zwei externen Kräfte durch mindestens zwei Knöpfe getragen werden, welche auf dem besagten Taster an ganz entgegen gesetzten Positionen in Bezug auf die besagte Achse (211) angebracht werden.

14. Taster gemäss Anspruch 5, mit einem oder mehreren Fenstern, um die Winkelposition des besagten beweglichen Elements (210) bzw. des zweiten beweglichen Elements (220) anzuzeigen.

15. Taster gemäss Anspruch 14, mit mindestens zwei Fenstern, um die Position des zweiten beweglichen Elements (220) anzuzeigen.

16. Taster gemäss Anspruch 1, mit einer Leuchtanzeige grosser Dimensionen, um die Kontrolle des Funktionierens des Tasters in allen Positionen des Tasters zu erlauben.

17. Taster gemäss Anspruch 1, mit einer externen thermisch isolierende Schicht, um die Übertragung der Hitze der Hände in den Taster zu verhindern.

18. Taster gemäss Anspruch 5, worin die Wirkung des besagten Stellantriebs (300) auf das besagte bewegliche Element (210) wesentlich ausgerichtet und entgegen gesetzt zur vom ersten elastischen Element (235) auf das besagte bewegliche Element (210) ausgeübte Kraft ist.

19. Taster gemäss Anspruch 5, worin die Wirkung des besagten zweiten Stellantriebs (400) auf das besagte zweite bewegliche Element (220) wesentlich ausgerichtet und entgegen gesetzt zur vom zweiten elastischen Element (225) auf das zweite bewegliche Element (220) ausgeübte Kraft ist.
